# EUROPÄISCHE PATENTSCHRIFT

(11) **EP 0 470 455 B1**
(45) Veröffentlichungstag und Bekanntmachung des Hinweises auf die Patenterteilung: **27.09.1995**
(21) Anmeldenummer: 91112581.3
(22) Anmeldetag: 26.07.1991
(51) Int. Cl.: C08J 9/16, C08J 9/00, C08L 25/04

(54) **Perlförmige antistatische expandierbare Styrolpolymerisate**
Antistatic expansible polystyrene pearls
Perles expansibles de polymère de styrène antistatiques

(30) Priorität: 06.08.1990 DE 4024871
(43) Veröffentlichungstag der Anmeldung: 12.02.1992
(73) Patentinhaber: BASF Aktiengesellschaft, 67063 Ludwigshafen (DE)
(72) Erfinder: Walter, Manfred, Dr., W-6720 Speyer (DE); Wassmer, Karl-Heinz, Dr., W-6703 Limburgerhof (DE); Lorenz, Maria, Dr., W-6700 Ludwigshafen (DE)

(56) Entgegenhaltungen:
- EP-A- 0 289 321
- DE-A- 2 655 808
- US-A- 4 603 149

## Beschreibung

Die Erfindung betrifft perlförmige antistatische expandierbare Styrolpolymerisate, die sich durch ein gutes Rieselverhalten auszeichnen.

Es ist bekannt, expandierbare Styrolpolymerisate mit quaternären Ammoniumsalzen antistatisch auszurüsten. Gemäß den Beispielen der US-PS 4,603,149 und US-PS 4,628,068 erfolgt die Beschichtung durch Behandeln mit einer weniger als 1 %igen Lösung des Ammoniumsalzes in Pentan und anschließendes Verdampfen des Lösungsmittels. Das Verfahren ist sehr aufwendig und führt zu Produkten mit einer unbefriedigenden Rieselfähigkeit.

Versuche, das Ammoniumsalz in Substanz auf die Perlen aufzubringen, führten nicht zu einer gleichmäßigen Beschichtung der Oberfläche und zu schlecht rieselfähigen Produkten.

In US-A-4,603,149 wird ein expandierbares Styrolpolymerisat beschrieben, auf das als antistatisches Beschichtungsmittel ein quarternäres Ammoniumsalz aufgebracht wurde. Die Beschichtung ist nach dieser Methode jedoch ungleichmäßig.

In EP-A-289 321 wird ein Verfahren zur Beschichtung von expandierbaren Styrolpolymerisaten mit einem Organosol aus quarternären Ammoniumsalzen und Glycerylethern aus langkettigen Fettsäuren in n- oder Cycloaliphaten, gegebenenfalls mit aromatischen Komponenten, beschrieben. Hierbei muß in einem zusätzlichen Schritt das Lösungsmittel durch Drucksenkung entfernt werden. Dieses Verfahren ermöglicht zwar eine gleichmäßige Beschichtung, ist jedoch sehr aufwendig und kann in den üblichen Mischvorrichtungen zum Aufbringen der Beschichtung nicht eingesetzt werden.

In DE-A-26 55 808 werden bromhaltige Verbindungen enthaltende, flammgeschützte expandierbare Styrolpolymerisate beschrieben, die als Beschichtungsmittel feinteilige Kieselsäure enthalten. Diese Polymerisate zeichnen sich durch eine gute Rieselfähigkeit aus, zeigen jedoch ein unzureichendes antistatisches Verhalten.

Der Erfindung lag die Aufgabe zugrunde, ein Verfahren zu entwickeln, bei dem für die Beschichtung auf die Verwendung von Lösungsmitteln verzichtet werden kann, das zu Produkten mit guter Rieselfähigkeit führt und bei dem die Verarbeitungseigenschaften nicht ungünstig beeinflußt werden.

Überraschenderweise wurde nun gefunden, daß diese Ziele erreicht werden durch eine Beschichtung der perlförmigen expandierbaren Styrolpolymerisate mit einer Mischung aus einem quaternären Ammoniumsalz und feinteiliger Kieselsäure.

Gegenstand der Erfindung sind somit
perlförmige antistatische expandierbare Styrolpolymerisate, enthaltend
a) Polystyrol und/oder ein Styrolcopolymerisat mit mindestens 50 Gew.-% ein polymerisiertem Polystyrol,
b) 0,5 bis 3 Gew.-%, bezogen auf a), einer Beschichtung, enthaltend
   b1) 10 bis 70 Gew.-% feinteilige Kieselsäure mit einer mittleren Teilchengröße von 10 bis 100 µm
   b2) 20 bis 80 Gew.-% eines hydroxylgruppenhaltigen quaternären Ammoniumsalzes
   sowie gegebenenfalls
   b3) 0,05 bis 20 Gew.-% eines üblichen Haftvermittlers und/oder
   b4) 10 bis 30 Gew.-% eines üblichen Mittels zur Kühlzeitverkürzung
c) 1 bis 8 Gew.-%, bezogen auf a) eines C₃- bis C₆-Kohlenwasserstoffs als Treibmittel
und gegebenenfalls
d) übliche Zusatzstoffe in wirksamen Mengen.

Als Hauptkomponente a) enthalten die neuen Produkte Polystyrol und/oder ein Styrolcopolymerisat mit mindestens 50 Gew.-%, vorzugsweise mindestens 80 Gew.-% einpolymerisiertem Polystyrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft kann das Polystyrol eine geringe Menge eines Kettenverzweigers einpolymerisiert enthalten, d.h. einer Verbindung mit mehr als einer, vorzugsweise zwei Doppelbindungen, wie Divinylbenzol, Butadien oder Butandioldiacrylat. Der Verzweiger wird im allgemeinen in Mengen von 0,005 bis 0,05 Mol.-%, bezogen auf Styrol, verwendet.

Vorteilhaft verwendet man Styrolpolymerisate mit Molekulargewichten und Molgewichtsverteilung, wie sie in der EP-B 106 129 und der DE-A 39 21 148 beschrieben sind.

Auch Mischungen verschiedener Styrolpolymerisate können verwendet werden, wie sie beispielsweise in der DE-A 39 01 329, 39 08 238, 39 36 596, 39 31 862 und 39 16 602 beschrieben sind.

Als erfindungswesentliche Komponente b) enthalten die neuen Produkte 0,5 bis 3,0 Gew.-%, vorzugsweise 0,7 bis 2,5 Gew.-%, insbesondere 1,0 bis 2,0 Gew.-% einer Beschichtung enthaltend
b1) 10 bis 70 Gew.-%, vorzugsweise 20 bis 60 Gew.-%, insbesondere 25 bis 50 Gew.-% feinteilige Kieselsäure mit einer mittleren Teilchengroße von 10 bis 100 µm,
b2) 20 bis 80 Gew.-%, vorzugsweise 30 bis 70 Gew.-%, insbesondere 40 bis 60 Gew.-% eines hydroxylgruppenhaltigen quaternären Ammoniumsalzes, sowie gegebenenfalls
b3) 0,05 bis 20 Gew.-%, vorzugsweise 1 bis 10 Gew.-% eines üblichen Haftvermittlers und/oder
b4) 10 bis 30 Gew.-%, vorzugsweise 15 bis 25 Gew.-% eines üblichen Mittels zur Kühlzeitverkürzung.

Als feinteilige Kieselsäure b1) finden übliche Handelsprodukte Verwendung, die eine mittlere Teilchengröße zwischen 10 und 300, insbesondere zwischen 30 und 150 µm aufweisen. Die Oberfläche nach DIN 66 131 liegt im allgemeinen zwischen 100 und 1000 m²/g.

Geeignete Ammoniumsalze b2) enthalten am Stickstoff neben Alkylgruppen 1 bis 3 hydroxylgruppenhaltige organische Reste.

Geeignete quaternäre Ammoniumsalze sind beispielsweise solche, die am Stickstoff-Kation 1 bis 3, vorzugsweise 2, gleiche oder verschiedene Alkylreste mit 1 bis 12, vorzugsweise 1 bis 10, C-Atomen und 1 bis 3, vorzugsweise 2 gleiche oder verschiedene Hydroxy-alkyl- oder Hydroxyalkylpolyoxyalkylen-Reste gebunden enthalten, mit einem beliebigen Anion, wie Chlorid, Bromid, Acetat, Methylsulfat oder p-Toluolsulfonat.

Die Hydroxyl- und Hydroxyalkyl-polyoxyalkylen-Reste sind solche, die durch Oxyalkylierung eines Stickstoff-gebundenen Wasserstoffatoms entstehen und leiten sich von 1 bis 10 Oxyalkylenresten, insbesondere Oxyethylen- und Oxypropylen-Resten ab. 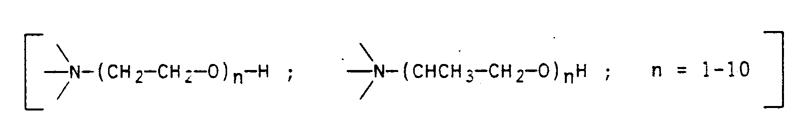
Vorzugsweise verwendet werden Bis-(2-hydroxyethyl)-octyl-methyl-ammonium-p-toluolsulfonat, Bis-(2-hydroxypropyl)-dioctyl-ammonium-chlorid, Tris-(2-hydroxyethyl)-methyl-ammonium-acetat und das durch Umsetzung von Ammoniak mit 15 Mol Ethylenoxid und anschließend Quaternisierung mit Dimethylsulfat erhaltene Ammoniumsalz.

Um eine gute und gleichmäßige Haftung der Beschichtung auf den Polymerisat-Perlen zu gewährleisten, kann gegebenenfalls b3) ein üblicher Haftvermittler mitverwendet werden. Geeignet sind beispielsweise wäßrige Dispersionen von Polyvinylacetat, Polyvinylpropionat, Polyethylacrylat, Polybutylacrylat und Styrol-Butadien-Copolymerisate.

Um die Kühlzeit (Mindestformverweilzeit) bei der Herstellung von Schaumstoffkörpern zu verringern, kann gegebenenfalls b4) ein übliches Mittel zur Kühlzeitverkürzung mitverwendet werden. Geeignet sind beispielsweise Glycerinester langkettiger Carbonsäuren, wie Glycerinmonostearat, Ester der Zitronensäure mit langketten Alkoholen, wie Citronensäuretristearylester.

Als Komponente c) enthalten die expandierbaren Styrolpolymerisate als übliches Treibmittel 0,5 bis 8, vorzugsweise 1 bis 6 Gew.-%, bezogen auf a), eines C₃- bis C₆-Kohlenwasserstoffs, wie Propan, n-Butan, Isobutan, n-Pentan, Isopentan, Neopentan und/oder Hexan. Vorzugsweise wird ein handelsübliches Pentan-Isomerengemisch verwendet.

Als Komponente d) können die expandierbaren Styrolpolymerisate übliche Hilfsstoffe, wie Farbstoffe, Pigmente, Füllstoffe, Stabilisatoren, Flammschutzmittel, Synergisten, Keimbildner, Gleitmittel, und dergleichen in üblichen wirksamen Mengen enthalten.

Um antistatisch ausgerüstete Styrolpolymerisate in der Praxis von nicht ausgerüsteten zu unterscheiden, setzt man ihnen vorzugsweise einen üblichen im UV-Bereich absorbierenden Fluoreszenzfarbstoff im allgemeinen in einer Menge von 1 bis 100, vorzugsweise 2 bis 50, insbesondere 5 bis 20 ppm zu. Geeignete optische Aufheller sind beispielsweise Ultraphor SF-PO [Bis-(cyanstyryl)-benzol, BASF AG], Lumogen F Violett 570 [4,5-Dimethoxy-N-2-ethylhexyl-1-naphthylimid, BASF AG], Uvitex OB [2,2'-(2,5-Thiophenediyl)bis(5-(1,1-dimethyl)-benzoxazol), Ciba Geigy GmbH] und Uvitex FP [4,4'-Bis(2-methoxystyryl)biphenyl), Ciba Geigy GmbH].

Als Zusatzstoffe sind auch Poly-(2,6-dimethyl)-1,4-phenylenether und Poly1,4-phenylensulfid geeignet (vgl. DE-A-39 04 370 und DE-A-39 24 868). Diese Zusätze bewirken eine Erhöhung der Wärmeformbeständigkeit des Schaumstoffs. Geeignete Zusatzstoffe sind auch styrollösliche Elastomere (vgl. DE-A-39 15 602), die die Elastizität des Schaumstoffs erhöhen.

Die expandierbaren Styrolpolymerisate liegen im allgemeinen in Perlform vor, vorteilhaft mit einem mittleren Durchmesser von 0,05 bis 6 mm, insbesondere 0,4 bis 3 mm. Die Herstellung erfolgt in an sich bekannter Weise durch Suspensionspolymerisation. Dazu wird Styrol, gegebenenfalls unter Zusatz weiterer Comonomerer in wäßriger Suspension in Gegenwart eines üblichen Suspensionsstabilisators mittels radikalbildender Katalysatoren polymerisiert. Vorteilhaft setzt man bei der Polymerisation einen Regler und/oder einen Kettenverzweiger zu, beispielsweise in einer Menge von 0,005 bis 0,05 Mol.-%. Das Treibmittel und gegebenenfalls die Zusatzstoffe können dabei bei der Polymerisation mit vorgelegt werden oder im Laufe der Polymerisation oder nach beendeter Polymerisation dem Ansatz zugefügt werden.

Die erhaltenen perlförmigen expandierbaren Styrolpolymerisate werden nach beendeter Polymerisation von der wäßrigen Phase abgetrennt, gewaschen und getrocknet, gesiebt und anschließend mit der Komponente b) beschichtet. Die Beschichtung kann in einem üblichen Trommelmischer erfolgen.

Für die Herstellung von Schaumstoffen werden die expandierbaren Styrolpolymerisate in bekannter Weise durch Erhitzen auf Temperaturen oberhalb ihres Erweichungspunkts, beispielsweise mit Heißluft oder vorzugsweise mit Dampf expandiert. Die erhaltenen Schaumstoffpartikel können nach dem Abkühlen und gegebenenfalls einer Zwischenlagerung durch erneutes Erhitzen weiter aufgeschäumt werden. Sie können anschließend in bekannter Weise in nicht gasdicht schließende Formen zu Formteilen verschweißt werden.

Die erhaltenen Schaumstoffe weisen im allgemeinen eine Dichte von etwa 0,01 bis 0,1 g/cm³ auf. Sie finden Verwendung u.a. als Wärme- und Schalldämmstoffe, als Polstermaterial und für stoßdämpfende Verpackungen. Die Schaumstoffe zeichnen sich durch eine stark verminderte Neigung zur elektrostatischen Aufladung aus.

Die in den Beispielen genannten Teile sind Gewichtsteile.

### Beispiele

In einem druckfesten Rührgefäß wurde eine Mischung aus 150 Teilen Wasser, 0,1 Teilen Natriumpyrophosphat, 100 Teilen Styrol, 0,15 Teile Benzoylperoxid, 0,25 Teile tert.-Butylperbenzoat 2 Stunden unter Rühren auf 90°C erhitzt. Nach 1 Stunde bei 90°C wurden 4 Teile einer 10 %igen wäßrigen Lösung von Polyvinylpyrrolidon als Suspensionsstabilisator zugefügt. Dann wurde 2 weitere Stunden bei 90°C, anschließend 2 Stunden bei 100°C und schließlich 2 Stunden bei 120°C gerührt. 5 Stunden nach Polymerisationsbeginn wurden 7 Teile Pentan zugefügt.

Nach dem Abkühlen auf Raumtemperatur wurde das erhaltene Perlpolymerisat (mittlerer Teilchendurchmesser 1,0 mm) abgetrennt, gewaschen, durch Blitztrocknung von anhaftendem Oberflächenwasser befreit und anschließend gesiebt.

Das perlförmige expandierbare Polymerisat der Siebfraktion 0,7 bis 1 mm wurde anschließend durch 3 Minuten dauerndes Auftrommeln in einem Schaufelmischer (Typ Lödige) mit den in der Tabelle angeführten Mengen an Beschichtungsmitteln beschichtet.

Als Beschichtungsmittel A (erfindungsgemäß) wurde verwendet eine innige Mischung aus 275 Teilen Bis-(2-hydroxyethyl)-octyl-methyl-ammonium-p-toluolsulfonat (90 %ig in Wasser, Chemstat 106G der Firma Chemax), 100 Teile Polyvinylpropionat (50 %ige wäßrige Dispersion, Propiofan 6D der Firma BASF AG), 150 Teile feinteilige Fällungskieselsäure (Sipernat 50 der Firma Degussa AG), 75 Teile Citronensäuretristearat (als Gleitmittel) und 0,3 Teile Bis-cyanstyryl-benzol (Ultraphor SF-PO der BASF AG) als UV-Farbstoff.

Das Beschichtungsmittel B (Vergleich) unterscheidet sich von A durch die Abwesenheit von Fällungskieselsäure.

Die Beschichtung C (Vergleich) besteht aus einem Gemisch von Glycerinmonostearat und Zinkstearat (80:20).

Zur Bestimmung des Rieselverhaltens wurden jeweils 1 kg der Perlpolymerisate zunächst 48 h in einem geschlossenen Glasgefäß gelagert. Anschließend wurde die Auslaufzeit der Produkte durch einen Trichter aus geglättetem V₂A-Stahl gemessen. Der Durchmesser des Trichters beträgt bei einem Neigungswinkel von 45° 250 mm an der Einfüllstelle und 20 mm am Auslauf. Zur Messung der Rieselfähigkeit wird der Auslauf des Trichters verschlossen und 1 kg der Polymerisate mit einer Perlgröße von 0,7-1,0 mm eingefüllt. Anschließend wird der Auslauf geöffnet und die Zeit ermittelt, in der der Trichter leergelaufen ist. Die erhaltenen Ergebnisse sind in der Tabelle zusammengestellt.

Zur Untersuchung der Verklebung beim Vorschäumen diente ein mit einem Metallrahmen eingefaßtes Sieb (Maschenweite: 0,1-0,2 mm) mit den Abmessungen 1000x800x250 mm, welches sich in einem abgeschlossenen Metallgehäuse mit Dampfzuleitung und Dampfabzugsvorrichtung befand. Der Wasserdampf von 100°C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min vorgeheizt. Anschließend wurden 500 g der expandierbaren Perlpolymerisate mit einem Teilchendurchmesser zwischen 0,7 und 1,0 mm auf dem Drahtgewebe gleichmäßig verteilt, die Apparatur geschlossen und das Dampfventil geöffnet. Nach 6 Minuten wurde das Dampfventil wieder geschlossen und das Metallgehäuse geöffnet. Von dem vorgeschäumten Material wurde anschließend die Schüttdichte bestimmt und die Verklebung beurteilt.

Die Stärke der verklebung wurde durch folgende Gruppen gekennzeichnet:
- 0:: nicht verklebt : = keinerlei Agglomerate
- 1:: leicht verklebt: = Perlen schwach verklebt, die Agglomerate sind jedoch durch leichte Schläge mit der flachen Hand aufzulösen
- 2:: mäßig verklebt: = durchweg aus Agglomeraten bestehend, die noch ohne Schwierigkeit mit der Hand zerbröckelt werden können
- 3:: stark verklebt: = die Agglomerate sind so stabil, daß sie mit der Hand nur schwierig und unter starker Deforma tion der Perlen zerkleinert werden können
- 4:: sehr stark verklebt = die aufgeschäumten Partikel sind völlig miteinander verschweißt.

Zur Bestimmung der Mindestformzeit (MFZ) als Maß für die Mindestzeit, die erforderlich ist, um Schaumstofformkörper einwandfrei entformen zu können, wurden die Schaumstoffpartikel nach 24 Stunden Zwischenlagerung in einem Formteilautomaten Typ Hofstetter HT 77 durch Bedampfung mit Wasserdampf (1,8 bar) zu einem Formteil (200x100x40 mm) der Dichte 20 g/l verschweißt. MFZ ist die Zeit, in der nach Kühlung der Form der Druckabbau im Formteil so weit fortgeschritten ist, daß beim Entfernen kein Ausbeulen oder Aufreißen der Oberfläche eintritt.

Der Oberflächenwiderstand R_{OA} des Schaumstoffkörpers wurde nach DIN 53 482 bei 50 % Luftfeuchtigkeit bestimmt. Die Relaxationszeit t₅₀ ist die Zeit, nach der eine auf die Oberfläche aufgebrachte elektrische Ladung auf 50 % abgefallen ist.

Die erhaltenen Ergebnisse sind in der Tabelle zusammengefaßt.

**Tabelle**

| Beispiel | 1 | 2 (Vergleich) | 3 (Vergleich) |
|---|---|---|---|
| Beschichtung | A | B | C |
| Beschichtungsmenge [%] | 2,0 | 1,4 | 0,5 |
| Rieseltest [s/kg] | 17,6 | nicht rieselfähig | 17 |
| Verklebung | 0 | 1 | 2 |
| MFZ [s] | 87 | 58 | 78 |
| R_{OA} [Ohm] | 9·10⁹ | 5·10¹⁰ | 10¹⁵ |
| t₅₀ | 2,7 s | 1,5 s | 12 h |
| Schüttdichte [g/l] | 20 | 20 | 20 |

## Patentansprüche

1. Perlförmige antistatische expandierbare Styrolpolymerisate, enthaltend
a) Polystyrol und/oder ein Styrolcopolymerisat mit mindestens 50 Gew.-% ein polymerisiertem Polystyrol
b) 0,5 bis 3 Gew.-%, bezogen auf a), einer Beschichtung, enthaltend
b1) 10 bis 70 Gew.-% feinteilige Kieselsäure mit einer mittleren Teilchengröße zwischen 10 und 100 µm
b2) 20 bis 80 Gew.-% eines hydroxylgruppenhaltigen quaternären Ammoniumsalzes
sowie gegebenenfalls
b3) 0,05 bis 20 Gew.-% eines üblichen Haftvermittlers und/oder
b4) 10 bis 30 Gew.-% eines üblichen Mittels zur Kühlzeitverkürzung
c) 1 bis 8 Gew.-%, bezogen auf a) eines C₃- bis C₆-Kohlenwasserstoffs als Treibmittel
und gegebenenfalls
d) übliche Zusatzstoffe in wirksamen Mengen.

## Claims

1. An antistatic expandable styrene polymer in bead form, containing
a) polystyrene and/or a styrene copolymer containing 50% by weight or more of copolymerized polystyrene,
b) from 0.5 to 3% by weight, based on a), of a coating containing
b1) from 10 to 70% by weight of finely divided silica having a mean particle size of from 10 to 100 µm,
b2) from 20 to 80% by weight of a hydroxyl-containing quaternary ammonium salt
and, if desired,
b3) from 0.05 to 20% by weight of a conventional coupling agent and/or
b4) from 10 to 30% by weight of a conventional agent for shortening the cooling time,
c) from 1 to 8% by weight, based on a), of a C₃- to C₆-hydrocarbon as blowing agent,
and, if desired,
d) conventional additives in effective amounts.

## Revendications

1. Polymérisats de styrène expansibles antistatiques en forme de perles, contenant
a) du polystyrène et/ou un copolymérisat de styrène avec au moins 50 % en poids de polystyrène mis en polymérisation
b) 0,5 à 3 % en poids, rapportés à a), d'un revêtement contenant
b1) 10 à 70 % en poids d'acide silicique finement divisé d'une grosseur de particules moyenne comprise entre 10 et 100 µm
b2) 20 à 80 % en poids d'un sel d'ammonium quaternaire à groupes hydroxyle
ainsi qu'éventuellement
b3) 0,05 à 20 % en poids d'un intermédiaire d'adhérence usuel et/ou
b4) 10 à 30 % en poids d'un moyen usuel de réduction du temps de refroidissement
c) 1 à 8 % en poids, rapportés à a), d'un hydrocarbure en C3 à C6 comme gonflant
et éventuellement
d) des additifs usuels en quantités efficaces.
